# EUROPEAN PATENT SPECIFICATION

(11) **EP 3 786 071 B1**
(45) Date of publication and mention of the grant of the patent: **18.01.2023**
(21) Application number: 19382738.3
(22) Date of filing: 30.08.2019
(51) Int. Cl.: B64F 5/60, B64C 21/10, B64C 9/22, B64C 5/02, B64D 33/02, B64C 7/02

(54) **METHOD FOR SIMULATING SURFACE ROUGHNESS ON AN AIRCRAFT**
VERFAHREN ZUR SIMULATION DER OBERFLÄCHENRAUHIGKEIT AUF EINEM FLUGZEUG
PROCÉDÉ DE SIMULATION DE RUGOSITÉ DE SURFACE SUR UN AÉRONEF

(43) Date of publication of application: 03.03.2021
(73) Proprietor: Airbus Operations, S.L.U., 28906 Getafe (Madrid) (ES)
(72) Inventor: JARA RODELGO, Alvaro, 28906 Getafe, Madrid (ES)
(74) Representative: ABG Intellectual Property Law, S.L.

(56) References cited:
- WO-A2-2019/013992
- CN-A- 109 657 275
- US-A1- 2006 051 592

## Description

### TECHNICAL FIELD OF THE INVENTION

The present invention belongs to the field of aircraft structures and, more particularly, to the field of surface roughness formed on aircraft part surfaces. Particularly, the present invention provides a method for simulating surface roughness on an aircraft part surface and a method for testing the behavior on flight of this aircraft part with surface roughness simulated. More particularly, the present surface roughness simulation comprises forming a roughness pattern on the aircraft part surface by means of a laser.

### BACKGROUND OF THE INVENTION

There are known numerous examples where the surface roughness plays an important role in the operation and performance in the aeronautical field. The ice accretions and pollution on the wings of aircrafts are some examples where the control of the roughness is important. The increase of roughness results degradation in aircraft aerodynamic performance and local flow perturbations. Particularly, roughness formed during the initial stages of icing is important to the ice accretion process and to the resulting degradation in aircraft performance. That is, the surface roughness enhances the local convection leading to more rapid ice formation rate and generates local flow perturbation that lead to higher skin friction and potentially force the boundary-layer flow to prematurely transition to turbulence.

Nowadays, to study the behavior of aircraft parts with roughness formed on their surface, it is carried out a roughness application or simulation on the aircraft surfaces by manual works resulting very human dependent.

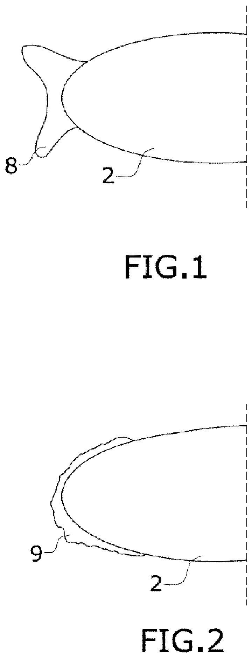

Particularly to the ice accretion, the amount and rate of icing depend on a number of meteorological and aerodynamic conditions, liquid water content, temperature, droplet diameter and rate of catch. The ice forms on aircraft surface may have many shapes, textures and shades. These ice shapes have been broadly thermal classified as rime ice (-15°C to -40°C), glaze ice (0°C to -10°C), and mixed ice (-10°C to -15°C). Furthermore, there is known a general ice type classification consisting of roughness ice, small ice, double horn ice, and ridge ice. Particularly, there are two main ice shapes, double horn ice (shown in figure 1) and the roughness ice (shown in figure 2) that are of special interest to simulate on the aircraft part surface so as to check the behavior of this aircraft part with said ice accretion. Until now, most of the attention was paid on double horn ice or roughness ice shapes, however, it has been demonstrated that roughness penalties due to roughness ice shapes cannot be underestimated. Thus, in order to simulate surface roughness, there are two main parameters that allow its characterization, the height and density of the ice roughness.

Typically the surface roughness has been simulated manually by blowing microspheres or carborundum on an aircraft surface where a glue or a lacquer was previously applied. This technique has the disadvantage that even though the parameter of roughness height can be set by choosing the right size of the microspheres or carborundum, the parameter of roughness density is very difficult to control given that the process is completely manual. That is, these known manual techniques do not accurately simulate the surface roughness desired. Moreover, recently, the blowing process has been replaced by compressed air gun in order to obtain a better flow control. However, since the surface roughness is still manually applied by moving the air gun by an operator, the density parameter is still not possible to be controlled.

The proposed invention solves an existing issue of accurately simulating ice roughness to later study on a wind tunnel the behaviour of the aircraft part on which the ice roughness is simulated. Particularly, the present invention provides a new way of roughness application by laser technology wherein the ice shape is directly integrated on the aircraft part surface into the wind tunnel model.

Finally, document CN109657275A discloses a simulation method considering icing surface roughness, including calculating equivalent sand grain roughness height and roughness surface and nearby grid division and boundary condition setting, dimensionless surface roughness, and changing corresponding spatial points. More particularly, page 6 paragraph 5 of said application relates to spraying silicon carbide on an airfoil.

In a first inventive aspect, the present invention provides a method for simulating a surface roughness type on a surface of at least an aircraft part, the method comprising the following steps:
a) selecting the type of surface roughness that is going to be simulated,
b) providing parameters associated to the selected surface roughness type, said parameters at least comprising the maximum roughness and density of said surface roughness type,
c) obtaining a pattern according to the parameters provided on step b),
d) providing at least an aircraft part having a surface thickness higher than the maximum roughness parameter,
e) forming the pattern on at least a portion of the surface of the provided aircraft part by means of a laser, and
f) obtaining the aircraft part with the selected roughness type simulated;
wherein the pattern is a projection lattice comprising a plurality of longitudinal projections and a plurality of transverse projections being perpendicular to the longitudinal projections, both pluralities of projections having a height corresponding to the maximum roughness of selected surface roughness type, so that where each two consecutive longitudinal projections intersect with two consecutive transverse projections a recess is formed.

The present invention provides an advanced method for simulating surface roughness on any aircraft part. Particularly, the proposed method can simulate ice roughness, dust or pollution roughness and insect accretion roughness. When an aircraft is under flight conditions, ice accretion is usually generated due to the lower temperatures, as well as dust, pollution or insects are also accumulated on aircraft surfaces.

For roughness simulation, the proposed method first selects the type of surface roughness that is desired to be simulated on the surface of an aircraft part. In this step, an operator selects if the surface roughness corresponds to the ice roughness, dust roughness or insect roughness. Once the surface roughness is selected, the method provides the needed essential parameters related to the surface roughness type that has been established for the roughness simulation. That is, according to the type of roughness established, the parameters that define said surface roughness type are provided by an aeronautical certification authority. These parameters are the maximum roughness and the density. Particularly, the maximum roughness corresponds to the vertical distance (roughness height) between the highest peak and the deepest valley along the complete extent of the surface roughness.

Then, according to the parameters already provided by the present method, this method obtains a pattern dimensioned according to the maximum roughness and density parameters previously provided. The pattern is a projection lattice that comprises longitudinal projections and transverse projections perpendicular between them. The height of both type of projections corresponds to the maximum roughness of the surface roughness type selected. This projection lattice that conforms the pattern comprises at least a recess formed between the intersection of two consecutive longitudinal projections and two consecutive transverse projections.

Once the pattern is determined according to the selected surface roughness type, the method provides the aircraft part on which the surface roughness wants to be simulated. Then, by laser application the determined pattern is formed on at least a portion of the aircraft part surface. In particular, the laser projects on the aircraft part surface removing part of the material from this surface to form the previously defined pattern. After the pattern is formed the methods obtains the aircraft part with the surface roughness simulated. That is, the present method provides the simulation of the surface roughness on any aircraft part surface.

The present method advantageously allow controlling both maximum roughness and density parameters of the surface roughness that wants to be simulated. Further, by the laser application the proposed method ensures repeatability in the surface roughness simulation and consequently the methods advantageously ensures the quality of data obtained from the aircraft part when it is studies its behaviours with the surface roughness simulated. That is, the data quality obtained by the present method is increased since this method is able to reproduce the same pattern for a particular surface roughness type.

The reason to control both maximum roughness and density is to ensure repeatability of the surface roughness applied in different simulation tests, and therefore, it is ensure that the surface roughness does not disturb the aerodynamic coefficients.

In the prior art solutions it is simulated the surface roughness by manual methods and therefore the results obtained in the test performed into a wind tunnel are different between them according to the same surface roughness simulated. That is, in these prior art solutions it is needed to repeat the simulation as many times as necessary until obtaining results next to the real ones, and consequently, the use of wind tunnel increases. By contrast, in the present method the use of wind tunnel is reduced compared to the prior art solutions since the present method ensures the reproducibility of the surface roughness as real as possible.

In a particular embodiment, the method further comprises testing the behaviour of the aircraft part under flight conditions, wherein this test comprises the following steps:
- providing an aircraft part with a surface roughness simulated on the surface of said aircraft part by the foregoing method,
- positioning the aircraft part inside a wind tunnel,
- applying flight conditions within the wind tunnel by means of at least an air flow, and
- testing the behavior of the aircraft part.

According to this step of testing, the present method provides information about the behaviour of the aircraft part with the selected roughness simulated.

Furthermore, the surface roughness simulation of the prior art solutions dirties the work space a lot and requires masks and safety clothes due to the microspheres or carborundum application and this can impact to the operator.

The present method seeks to obtain the application of a uniform and exact pattern according to a particular surface roughness type.

Particularly to the ice accretion, the effects of ice roughness on the aircraft aerodynamics, performance and control are the following:
- maximum lift decrease; increase of stall speed;
- pitching moment characteristics near stall and type of stall;
- decrease of maximum angle of attack and margin for stall;
- drag increase;
- decrease of effectivity of horizontal tail plane and longitudinal stability;
- weight increases;
- engine trust decrease; and
- performance degradations.

In a particular embodiment, the formed pattern is a uniform lattice. In a more particular embodiment, the pattern is a uniform square lattice.

This particular pattern in the form of uniform lattice advantageously allows that the proposed method very easily controls the density parameter of the surface roughness. Therefore, it provides good results in terms of simulated surface roughness. Furthermore, the uniform square lattice also reduces the manufacturing work in the surface roughness simulation.

In a particular embodiment, the material of the aircraft part surface is cryogenic steel. This type of material is used for the aircraft part surface due to the cryogenic temperatures needed inside the wind tunnel in the testing step of the present method. In another particular embodiment, the material of the aircraft part surface is a material that resist (no dilatation, no cracking,..) the cryogenic conditions.

In a particular embodiment, before performing step e), the method comprises configuring the laser according to the parameters of the selected surface roughness type.

According to the geometry shape obtaining in the step b) in the form of a pattern, the laser is configured for forming on at least a portion of the aircraft part surface said pattern determined. Advantageously, the present method allows forming the pattern determined in the most accurate way possible through the configuration of the laser. Particularly, the parameters of the lasers that are configured are the power and the pattern of application.

In a particular embodiment, the recommendable laser is a fiber laser to have a powerful beam at the same time that high precision in order to avoid causing damage to the surroundings.

Particularly, this laser projects a beam of fibers that burns the material of the aircraft part surface.

In a particular embodiment, the surface roughness at least comprises one of the following: ice, dust, pollution and insects.

When the aircraft is under flight conditions, ice is often formed on the surfaces of the aircraft, as well as the accumulation of dust and insects.

In a particular embodiment, the pattern corresponds to the geometry shape of a roughness ice.

In a particular embodiment, the at least aircraft part is a slat.

In another particular embodiment, the at least aircraft part is the leading edge of the horizontal tail planes or the edged of the nacelles.

In a particular embodiment, the parameters are predetermined parameters provided by a certification authority.

In a particular embodiment, the pattern is formed by removing portions of materials of the surface by the projection of the laser.

Given that the aircraft part surface needs to have a thickness greater than the maximum roughness of the simulated roughness, the way for forming the pattern determined is removing portions of materials of this surface projecting the laser on it. In this sense, it is understood that the aircraft parts are previously manufactured with a thickness greater than the theoretical thickness for allowing the laser removes portions of this surface in order to form the pattern of the roughness that is going to be simulated.

In a second inventive aspect, the present invention provides a method for testing the behavior of an aircraft part under flight conditions, the method comprising the following steps:
i) providing an aircraft part with a surface roughness simulated on the surface of said aircraft part by the method according to the first inventive aspect,
ii) positioning the aircraft part inside a wind tunnel,
iii) applying flight conditions within the wind tunnel by means of at least an air flow, and
iv) testing the behavior of the aircraft part.

The present testing method allows the user to know the behavior of aircraft parts or aircrafts under flight conditions with roughness accretions on the surfaces of them, in particular by a roughness that is previously simulated by the method of the first inventive aspect.

In a particular embodiment, wherein when the aircraft part provided comprises an uniform square pattern, the aircraft part is positioned with this simulated roughness pattern rotated, preferably 45°, with respect to the applied air flow. Advantageously, the method avoids the air flow deforms the recesses of the simulated pattern on the aircraft part surface. Furthermore, when rotating the aircraft part 45°, it is ensured that the surface roughness represents an obstacle for the air flow flowing under flight conditions. In this way, the results of the behaviors of the aircraft part provided by the present method are more accurate.

All the features described in this specification (including the claims, description and drawings) and/or all the steps of the described method can be combined in any combination, insofar as falls within the scope of the appended claims.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic cross sectional view of an aircraft slat with a double horn ice formed on its surface.
- Figure 2: This figure shows a schematic view of an aircraft slat with roughness ice in the form of thin cover.
- Figure 3: This figure shows a roughness pattern according to a particular embodiment of the present invention.
- Figure 4: This figure shows a roughness pattern according to a particular embodiment of the present invention.
- Figure 5: This figure shows an aircraft according to a particular embodiment of the present invention.

### DETAILED DESCRIPTION OF THE INVENTION

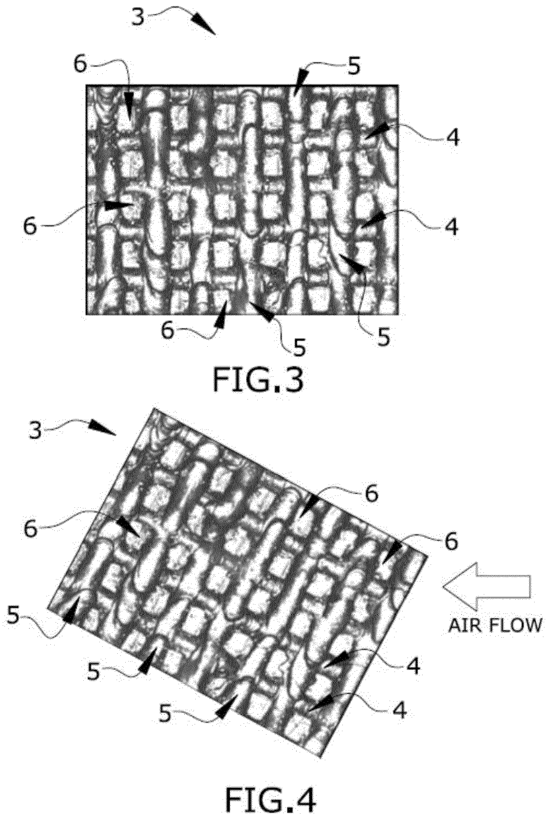

Figures 3 and 4 show a pattern (3) that corresponds to the geometry shape of a surface roughness that is simulated on an aircraft part (2) surface (1) according to the present simulation method. The pattern (3) has a geometry shape through which the surface roughness is simulated according to parameters associated to a selected surface roughness type. In particular, this pattern (3) is a uniform square lattice that comprises longitudinal projections (4) and transverse projections (5), the longitudinal projections being perpendicular to the transverse projections (5). This pattern (3) also comprises a recess (3) formed in the intersections between two consecutive longitudinal projections (4) and two consecutive transverse projections (5). With this pattern configuration, the present method simulates a surface roughness on the surface (1) of an aircraft part (2).

### Simulation method

In a particular example, the present invention proposes a method for simulating ice roughness on a surface (1) of at least an aircraft part (2), the method comprising the following steps:
a) selecting the type of ice roughness that is going to be simulated,
b) providing parameters associated to the selected ice roughness type, said parameters at least comprising the maximum roughness and density of said ice roughness type,
c) obtaining a pattern (3) according to the parameters provided on step b),
d) providing at least an aircraft part (2) having a surface thickness higher than the maximum roughness parameter,
e) forming the pattern on at least a portion of the surface (1) of the provided aircraft part (2) by means of a laser, and
f) obtaining the aircraft part (2) with the selected ice roughness simulated;
wherein the pattern (3) is a projection lattice comprising a plurality of longitudinal projections (4) and a plurality of transverse projections (5) being perpendicular to the longitudinal projections (4), both pluralities of projections (4, 5) comprising a height corresponding to the maximum roughness of selected surface roughness type, so that where each two consecutive longitudinal projections (4) intersect with two consecutive transverse projections (5) a recess (6) is formed.

In the step a), the user selects an ice roughness type corresponding to a roughness ice shape. According to this type of ice roughness, the method provides in the step b) the maximum roughness parameter and the density parameter of this ice roughness selected. These parameters are provided by an aeronautical certification authority according to the ice roughness selected.

Then, the method obtains in the step c) the patter (3) (shown on Figures 3 and 4) according to the provided ice roughness parameters.

Once the ice roughness type has been selected and the pattern (3) is obtained, in the step d) it is provided an aircraft part (2), i.e., slat, with a thickened thickness respect to the theoretical part. That is, the surface thickness of this aircraft part (2) is higher than the maximum roughness parameter of the ice roughness type previously selected.

In a particular example, before step d), the aircraft part (2) is thickened with a cryogenic steel material.

Then, in the step e) the previously determined patter (3) is formed on the surface (1) of the aircraft part (2) in order to simulate the ice roughness desired. Particularly, in this step e) a beam of fibers is applied on the surface (1) by a laser. This fiber beam penetrates the surface (2) removing part of the cryogenic steel material and then obtaining recesses (6) according to the pattern (3) determined in the step c). In a particular example, prior to project the fiber beam on the surface (1), the laser is configured in terms of power and pattern configuration according to the parameters of the ice roughness selected.

### Testing method

Once the ice roughness has been simulated on the surface (1) of an aircraft part (2), then this aircraft part (2) is tested by the present testing method. This method for testing the behavior under flight conditions of an aircraft part (2) comprises the following steps:
i) providing an aircraft part (2) with an ice roughness simulated on the surface (1) of said aircraft part (2) by the previously defined simulation method,
ii) positioning the aircraft part (2) inside a wind tunnel,
iii) applying flight conditions within the wind tunnel by means of at least an airflow, and
iv) testing the behavior of the aircraft.

According to this method, the present invention can test the aerodynamic behavior under flight conditions of an aircraft part (2) with ice roughness simulated on its surface (1).

The method provides an aircraft part (2) with ice roughness simulated on its surface (2) by means of the present simulation method. Then, the aircraft part (2) is positioned inside the wind tunnel wherein flight conditions are applied by an air flow. While the aircraft part (2) is under flight condition inside the wind tunnel, the aerodynamic behavior of this aircraft part (2) is tested.

In a particular example, when the aircraft part (2) with ice roughness simulated by the uniform square lattice patterned (3) (shown in Figure 3) is introduced into the wind tunnel, this aircraft part (2) is rotated 45° with respect to the air flow direction as it is shown on Figure 4. With this rotation, the present method avoids the incidence of the air flow on the surface (1) of the aircraft part (2) deforms the recesses of said simulated pattern (3).

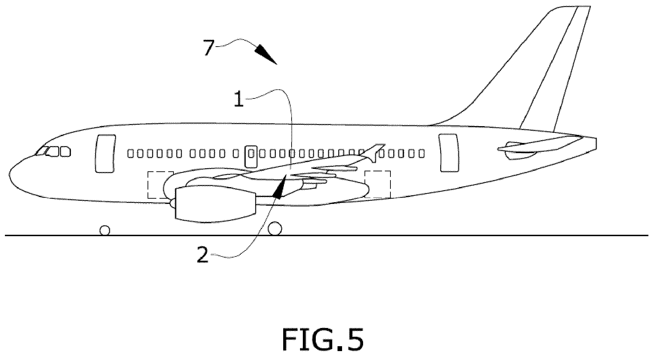

Figure 5 shows an aircraft (7) comprising a slat (2) as an aircraft part comprising a surface roughness simulated on its surface (1) according to the obtained pattern (3) shown on Figures 3-4.

## Claims

1. Method for simulating a surface roughness type on a surface (1) of at least an aircraft part (2), the method comprising the following steps:
a) selecting the surface roughness type that is going to be simulated,
b) providing parameters associated to the selected surface roughness type, said parameters at least comprising the maximum roughness and density of said surface roughness type,
c) obtaining a pattern (3) according to the parameters provided on step b),
d) providing at least an aircraft part (2) having a surface thickness higher than the maximum roughness parameter,
e) forming the pattern on at least a portion of the surface (1) of the provided aircraft part (2) by means of a laser, and
f) obtaining the aircraft part (2) with the selected roughness type simulated;
wherein the pattern (3) is a projection lattice comprising a plurality of longitudinal projections (4) and a plurality of transverse projections (5) being perpendicular to the longitudinal projections (4), both pluralities of projections (4, 5) having a height corresponding to the maximum roughness of selected surface roughness type, so that where each two consecutive longitudinal projections (4) intersect with two consecutive transverse projections (5) a recess (6) is formed.

2. Method according to claim 1, wherein the pattern (3) is a uniform lattice.

3. Method according to any of previous claims, wherein the pattern (3) is a uniform square lattice.

4. Method according to any of previous claims, wherein the material of the aircraft part surface (1) is cryogenic steel.

5. Method according to any of previous claims, wherein before performing step e) the method comprises configuring the laser according to the parameters of the selected surface roughness type.

6. Method according to any of previous claims, wherein the laser is a fiber laser.

7. Method according to any of previous claims, wherein the surface roughness at least comprises one of the following: ice, dust, pollution, and insects.

8. Method according to claim 7, wherein the pattern (3) corresponds to the geometry shape of a roughness ice.

9. Method according to any of previous claims, wherein the at least aircraft part (2) is a slat.

10. Method according to any of previous claims, wherein the parameters are predetermined parameters provided by a certification authority.

11. Method according to any of previous claims, wherein the pattern is formed by removing portions of materials of the surface (1) by the projection of the laser.

12. Method for testing the behavior under flight conditions of an aircraft part (2), the method comprising the following steps:
- providing an aircraft part (2) with a surface roughness simulated on the surface (1) of said aircraft part (2) by the method according any of previous claims,
- positioning the aircraft part (2) inside a wind tunnel,
- applying flight conditions within the wind tunnel by means of at least an air flow, and
- testing the behavior of the aircraft part (2).

13. Method according to claim 12, wherein when the aircraft part (2) provided comprises a uniform square pattern (3), the aircraft part (2) is positioned with this simulated roughness pattern rotated, preferably 45°, with respect to the applied air flow.

## Patentansprüche

1. Verfahren zur Simulation eines Oberflächenrauheitstyps auf einer Oberfläche (1) von mindestens einem Flugzeugteil (2), wobei das Verfahren die folgenden Schritte umfasst:
a) Auswählen des Oberflächenrauheitstyps, der simuliert werden soll,
b) Bereitstellen von Parametern, die dem ausgewählten Oberflächenrauheitstyp zugeordnet sind, wobei die Parameter mindestens die maximale Rauheit und Dichte des Oberflächenrauheitstyps umfassen,
c) Erhalten eines Musters (3) gemäß den in Schritt b) bereitgestellten Parametern,
d) Bereitstellen von mindestens einem Flugzeugteil (2) mit einer Oberflächendicke, die größer als der maximale Rauheitsparameter ist,
e) Bilden des Musters auf mindestens einem Anteil der Oberfläche (1) des bereitgestellten Flugzeugteils (2) mittels eines Lasers, und
f) Erhalten des Flugzeugteils (2) mit dem ausgewählten simulierten Rauheitstyp;
wobei das Muster (3) ein Projektionsgitter ist, das eine Vielzahl von Längsprojektionen (4) und eine Vielzahl von Querprojektionen (5) umfasst, die senkrecht zu den Längsprojektionen (4) sind, wobei beide Vielzahlen der Projektionen (4, 5) eine Höhe haben, die der maximalen Rauheit des ausgewählten Oberflächenrauheitstyps entspricht, so dass dort, wo sich jeweils zwei aufeinander folgende Längsprojektionen (4) mit zwei aufeinander folgenden Querprojektionen (5) schneiden, eine Vertiefung (6) gebildet wird.

2. Verfahren nach Anspruch 1, wobei das Muster (3) ein einheitliches Gitter ist.

3. Verfahren nach einem der vorhergehenden Ansprüche, wobei das Muster (3) ein einheitliches Quadratgitter ist.

4. Verfahren nach einem der vorhergehenden Ansprüche, wobei das Material der Oberfläche (1) des Flugzeugteils kryogener Stahl ist.

5. Verfahren nach einem der vorhergehenden Ansprüche, wobei das Verfahren vor dem Durchführen von Schritt e) Konfigurieren des Lasers gemäß den Parametern des ausgewählten Oberflächenrauheitstyps umfasst.

6. Verfahren nach einem der vorhergehenden Ansprüche, wobei der Laser ein Faser-Laser ist.

7. Verfahren nach einem der vorhergehenden Ansprüche, wobei die Oberflächenrauheit mindestens eines der folgenden umfasst: Eis, Staub, Verschmutzung und Insekten.

8. Verfahren nach Anspruch 7, wobei das Muster (3) der geometrischen Form von Rauheitseis entspricht.

9. Verfahren nach einem der vorhergehenden Ansprüche, wobei das mindestens eine Flugzeugteil (2) ein Vorflügel ist.

10. Verfahren nach einem der vorhergehenden Ansprüche, wobei die Parameter vorbestimmte Parameter sind, die von einer Zertifizierungsstelle bereitgestellt werden.

11. Verfahren nach einem der vorhergehenden Ansprüche, wobei das Muster gebildet wird, indem Anteile von Materialien der Oberfläche (1) durch die Projektion des Lasers entfernt werden.

12. Verfahren zum Testen des Verhaltens eines Flugzeugteils (2) unter Flugbedingungen, wobei das Verfahren die folgenden Schritte umfasst:
- Bereitstellen eines Flugzeugteils (2) mit einer Oberflächenrauheit, die auf der Oberfläche (1) des Flugzeugteils (2) durch das Verfahren gemäß einem der vorhergehenden Ansprüche simuliert wurde,
- Positionieren des Flugzeugteils (2) in einem Windkanal,
- Anwenden von Flugbedingungen innerhalb des Windkanals mittels mindestens einer Luftströmung, und
- Testen des Verhaltens des Flugzeugteils (2).

13. Verfahren nach Anspruch 12, wobei, wenn das bereitgestellte Flugzeugteil (2) ein einheitliches Quadratmuster (3) umfasst, das Flugzeugteil (2) so positioniert wird, dass dieses simulierte Rauheitsmuster in Bezug zu der angewendeten Luftströmung gedreht positioniert wird, vorzugsweise um 45°.

## Revendications

1. Procédé pour simuler un type de rugosité de surface sur une surface (1) d'au moins une partie d'aéronef (2), le procédé comprenant les étapes suivantes :
a) sélectionner le type de rugosité de surface qui va être simulé,
b) fournir des paramètres associés au type de rugosité de surface sélectionné, lesdits paramètres comprenant au moins la rugosité et la densité maximales dudit type de rugosité de surface,
c) obtenir un motif (3) selon les paramètres fournis à l'étape b),
d) fournir au moins une partie d'aéronef (2) ayant une épaisseur de surface supérieure au paramètre de rugosité maximale,
e) former le motif sur au moins une partie de la surface (1) de la partie d'aéronef (2) fournie au moyen d'un laser, et
f) obtenir la partie d'aéronef (2) avec le type de rugosité sélectionné simulé ;
dans lequel le motif (3) est un réseau de saillies comprenant une pluralité de saillies longitudinales (4) et une pluralité de saillies transversales (5) perpendiculaires aux saillies longitudinales (4), les deux pluralités de saillies (4, 5) ayant une hauteur correspondant à la rugosité maximale du type de rugosité de surface sélectionné, de sorte que, à l'endroit où chaque paire de saillies longitudinales consécutives (4) croise une paire de saillies transversales consécutives (5), un évidement (6) soit formé.

2. Procédé selon la revendication 1, dans lequel le motif (3) est un réseau uniforme.

3. Procédé selon l'une quelconque des revendications précédentes, dans lequel le motif (3) est un réseau carré uniforme.

4. Procédé selon l'une quelconque des revendications précédentes, dans lequel le matériau de la surface (1) de partie d'aéronef est de l'acier cryogénique.

5. Procédé selon l'une quelconque des revendications précédentes, dans lequel, avant de réaliser l'étape e), le procédé comprend la configuration du laser selon les paramètres du type de rugosité de surface sélectionné.

6. Procédé selon l'une quelconque des revendications précédentes, dans lequel le laser est un laser à fibre.

7. Procédé selon l'une quelconque des revendications précédentes, dans lequel la rugosité de surface comprend au moins l'un des éléments suivants : givre, poussière, pollution et insectes.

8. Procédé selon la revendication 7, dans lequel le motif (3) correspond à la forme géométrique d'un givre rugueux.

9. Procédé selon l'une quelconque des revendications précédentes, dans lequel l'au moins une partie d'aéronef (2) est une latte.

10. Procédé selon l'une quelconque des revendications précédentes, dans lequel les paramètres sont des paramètres prédéterminés fournis par une autorité de certification.

11. Procédé selon l'une quelconque des revendications précédentes, dans lequel le motif est formé par enlèvement de portions de matériaux de la surface (1) par la projection du laser.

12. Procédé pour tester le comportement en conditions de vol d'une partie d'aéronef (2), le procédé comprenant les étapes suivantes :
- fournir à une partie d'aéronef (2) une rugosité de surface simulée sur la surface (1) de ladite partie d'aéronef (2) par le procédé selon l'une quelconque des revendications précédentes,
- positionner la partie d'aéronef (2) à l'intérieur d'une soufflerie,
- appliquer des conditions de vol à l'intérieur de la soufflerie au moyen d'au moins un flux d'air, et
- tester le comportement de la partie d'aéronef (2).

13. Procédé selon la revendication 12, dans lequel, lorsque la partie d'aéronef (2) fournie comprend un motif carré uniforme (3), la partie d'aéronef (2) est positionnée avec ce motif de rugosité simulé tourné, de préférence de 45°, par rapport au flux d'air appliqué.
